# EUROPÄISCHE PATENTANMELDUNG

(11) **EP 3 474 400 A1**
(43) Veröffentlichungstag der Anmeldung: **24.04.2019**
(21) Anmeldenummer: 18193331.8
(22) Anmeldetag: 07.10.2011
(51) Int. Cl.: H02G 3/06, H01R 4/48

(54) **HALTEVORRICHTUNG ZUM HALTEN EINES KABELS**

(30) Priorität: 01.12.2010 CH 20182010
(62) Teilanmeldung aus: 11767002.6
(71) Anmelder: Agro AG, 5502 Hunzenschwil (CH)
(72) Erfinder: AUMILLER, Markus, 5502 Hunzenschwil (CH)
(74) Vertreter: Rentsch Partner AG

(57) **Zusammenfassung**

Eine Haltevorrichtung zum Halten eines Kabels umfasst ein hülsenförmiges Basisteil (1), ein Anschlussteil (2), das mit dem Basisteil (1) verbindbar ist, und ein elastisch spannbares Klammerteil (3), das zwischen Basisteil (1) und Anschlussteil (2) angeordnet ist. Das Klammerteil (3) weist elastisch spannbare Klammerstreben (7), die geeignet sind ein Kabel zu umklammern, und wenigstens einen Spannflügel (9) auf, der bogenartig von einer Klammerstrebe (7) abragt und das Klammerteil (3) elastisch gespannt an einer Innenumfangsfläche des Basisteils (1) abstützt. Die Klammerstreben (7) und Spannflügel (9) des Klammerteils (3) schliessen durchgehend an einander an.

## Beschreibung

Die vorliegende Erfindung betrifft eine Haltevorrichtung zum Halten eines Kabels, insbesondere eines Erdungs- oder Abschirmkabels, wie es typischerweise bei Kabeldurchführungen oder Kabeleinführungen an Gehäusen von Geräten oder Schaltschränken eingesetzt wird.

Derartige Haltevorrichtungen können einerseits einer Zugentlastung mit Dichtfunktion des Kabels und andererseits einer elektromagnetischen Abschirmung sowie einem Ableiten von Leitungsstörungen dienen. Hierfür wird das Kabel in der Haltevorrichtung axial gesichert und ein elektrischer Kontakt zu einer Kabelabschirmung herstellt, der meist aus einem Litzengeflecht besteht, das unterhalb einer äusseren Isolation des Kabels angeordnet ist. Gängige Haltevorrichtungen umfassen in der Regel ein hülsenförmiges Basisteil, das über einem Kabel angeordnet wird, ein Kontakt- und/oder Halteteil, welches das Kabel hält und ggf. einen Kontakt zur Kabelabschirmung herstellen kann, und ein Anschlussteil, das mit dem Basisteil verbunden werden kann und das Kontakt-/Halteteil im Basisteil positioniert. Das Basisteil kann als Schraubhülse ausgebildet sein und z. B. mit einem Gehäuse eine Verschraubung eingehen, so dass das Kabel am Gehäuse fixiert ist.

Aus der EP 1526620 B1 oder der DE 202009013522 U1 sind beispielsweise Kabelverschraubungen für abgeschirmte Kabel bekannt, bei welchen ein Kontaktteil mit mehreren ringförmig angeordneten elastischen Kontaktbügeln versehen ist, die im Wesentlichen schräg zur Kabellängsrichtung verlaufen, wobei die Bügelenden zur Kabelachse hin gerichtet sind. Das Kontaktteil ist innerhalb eines Gewindestutzens angeordnet, der in ein Gehäuse geschraubt werden kann. Das Kontaktteil geht mit dem Gewindestutzen eine elektrische Verbindung ein. Ein Druckelement, wie etwa eine Überwurfmutter, kann mit dem Gewindestutzen verschraubt werden, wodurch sich beispielsweise ein Innendurchmesser einer Halterung oder Dichtung verengt. Das Druckelement kann dabei auch derart auf die Kontaktbügel wirken, dass deren Enden radial nach innen auf die Kabelabschirmung gepresst werden, wodurch ein elektrischer Kontakt zur Abschirmung hergestellt werden kann. Alternativ können die Bügelenden bereits beim Einschieben des Kabels über das Kabel schleifen und von diesem aufgebogen werden.

Zum Anbringen der Kabelverschraubung am Kabel muss der Kabelmantel stellenweise entfernt werden, so dass die Kabelabschirmung freigelegt ist. Nach dem Freilegen der Abschirmung wird das Kabel in axialer Richtung durch den Kontaktbügelring geschoben, wobei beispielsweise im Falle grösserer Kabel im vorgesehenen Klemmbereich die Kontaktbügel über das Litzengeflecht reiben können. Dabei besteht die Gefahr, dass einzelne Bereiche des Geflechts verletzt oder zurückgeschoben werden und der elektrische Kontakt nachteilig beeinträchtigt wird. Darüber hinaus kann das Kabel nicht innerhalb des Kontaktbügelrings verdreht werden, da dabei die Kanten der Bügel ebenfalls die Litze beschädigen könnten. Ferner kann das Kabel nicht wieder aus dem Kontaktbügelring herausgezogen werden, da sich dabei die Spitzen der Bügelenden in das Litzengeflecht bohren würden und dieses beschädigen könnten. Daher werden die Litzenenden meist in einem gesonderten Arbeitsschritt ummantelt, beispielsweise mit einem Klebeband oder mit leitfähigem Material. Eine solche Art einer Kabelverschraubung geht auch aus der US 4022966 hervor. Im Falle von Kabeln mit geringem Durchmesser wird der Kontakt zwischen dem Gewindestutzen und dem Kabel meist erst sichergestellt, wenn das Kabel bereits im Inneren des Gewindestutzen und der Überwurfmutter aufgenommen ist und die Kontaktbügels mittels der Überwurfmutter angepresst werden. Da keine definierte axiale Positionierung gegeben ist, besteht die Möglichkeit, dass die Kontaktbügel nicht über einem freigelegten Litzenbereich, sondern über der Kabelummantelung fixiert werden und keine elektrische Kontaktierung erfolgt. Insbesondere bei sehr dünnen Kabeln besteht das Risiko, dass eine radiale Bewegung der Kontaktbügel beim Zusammenschrauben von Gewindestutzen und Überwurfmutter nicht ausreicht, um die Kontaktbügelenden auf das Litzengeflecht zu pressen.

In der DE 102006052090 A1 ist eine Kabelverschraubung für geschirmte Kabel gezeigt, die zur Aufnahme mehrerer Kabel geeignet ist. Ein Doppelgewindestutzen kann mit einem ersten Gewinde in ein Gehäuse eingesetzt werden. Ein zweites Gewinde wird mit einer Hutmutter verschraubt, wobei mit zunehmender Verschraubung Querschnitte mehrerer Kabeldurchführungen in einer Quetschdichtung verengt werden und somit die Kabel axial fixiert werden. Zur Herstellung einer Verbindung der Kabelabschirmung mit dem Doppelgewindestutzen ist ein Kontakteinsatz vorgesehen, der eine Mehrzahl elektrisch leitender Klemmspangen aufweist, die von einem Haltebolzen zu mehreren Klemmanordnungen arrangiert werden. Die Klemmspangen werden in Umfangrichtung um den Haltebolzen angeordnet, so dass jeweils zwei Arme benachbarter Klemmspangen eine Klemmanordnung bilden und relativ zum Haltebolzen zur Aufnahme eines Kabels elastisch aufgebogen werden können. Die Enden der Klemmspangenarme sind nach innen gebogen, so dass die Gesamtheit der in Umfangsrichtung angeordneten Klemmspangen eine Kontaktfläche für einen Kontakt mit dem Doppelgewindestutzen bilden.

Bei dieser Ausgestaltung einer Kabelverschraubung sind sowohl zur Kontaktierung der Kabelabschirmung als auch zur Kontaktierung des Doppelgewindestutzens mehrere Klemmspangen nötig, die an eine zusätzliche Halterung montiert werden müssen, damit sie von dieser zusammengehalten werden. Eine Klemmspange allein kann weder ein Kabel aufnehmen noch eine sichere Positionierung innerhalb des Doppelgewindestutzens sicherstellen.

Es ist eine Aufgabe der vorliegenden Erfindung, eine Haltevorrichtung zu schaffen, die eine zuverlässige Halterung und Positionierung eines Kabels in der Haltevorrichtung ermöglicht, eine sichere Kontaktierung zwischen einer Kabelabschirmung und der Haltevorrichtung sicherstellt, eine flexible und einfache Montage am Kabel erlaubt, mit wenigen Bauteilen auskommt und kostengünstig herstellbar ist.

Diese Aufgabe wird von der Erfindung durch eine Haltevorrichtung nach Anspruch 1 gelöst. Vorteilhafte Ausgestaltungen und weitere Ausführungsbeispiele sind in den abhängigen Ansprüchen beschrieben.

Eine Haltevorrichtung zum Halten eines Kabels nach der vorliegenden Erfindung umfasst ein hülsenförmiges Basisteil, ein Anschlussteil, das mit dem Basisteil verbindbar ist, und ein elastisch spannbares Klammerteil, das zwischen Basisteil und Anschlussteil angeordnet ist und gehalten werden kann. Das Klammerteil weist elastisch spannbare Klammerstreben, die geeignet sind ein Kabel zu umklammern, und wenigstens einen Spannflügel auf, der bogenartig von einer Klammerstrebe abragt und diese wenigstens teilweise umragt. Der wenigstens eine Spannflügel stützt das Klammerteil elastisch gespannt an einer Innenumfangsfläche des Basisteils ab. Klammerstreben und Spannflügel des Klammerteils schliessen durchgehend an einander an, bzw. gehen unmittelbar in einander über. Das heisst, das Klammerteil wird von einer durchgehenden gebogenen, geknickten oder anderweitig geformten Materiallinie ausgebildet, aus der die Klammerstreben und Spannflügel aneinander anschliessend ausgeformt sind. Das Klammerteil ist vorzugsweise einstückig ausgebildet. Das Klammerteil kann aber auch mehrteilig sein, sofern es entlang einer durchgehenden Linienführung ausgebildet ist und einzelne Teile fest miteinander verbunden sind. Beispielsweise können zwei Klammerstreben in einander übergehen. Grundsätzlich können aber auch mehrere Teilelemente zu einem Klammerteil fest verbunden werden, solange dabei ein durchgehender Verlauf der Klammerstreben und Spannflügel gegeben ist.

Das hülsenförmige Basisteil kann beispielsweise als Gewindestutzen ausgebildet sein, der ein erstes Gewinde zur Verbindung mit einem Gehäuse und ein zweites Gewinde zur Verbindung mit dem Anschlussteil aufweist. Das Anschlussteil kann beispielsweise als Überwurfmutter vorgesehen sein, die auf den Gewindestutzen aufgeschraubt werden kann. Es kann aber auch eine andere Verbindung zwischen Basisteil und Anschlussteil, wie etwa eine Steckverbindung vorgesehen sein, die eine axiale Bewegung zwischen Basisteil und Anschlussteil zur Verbindung vorsieht. Um die erfindungsgemässe Haltevorrichtung an einem Kabel, insbesondere an einem abgeschirmten Kabel, zu befestigen, wird die Kabelabschirmung in einem Bereich des Kabels frei gelegt. Dies kann an einem Kabelende aber auch in einem mittleren Bereich eines Kabels geschehen. Anschliessend wird das Klammerteil auf dem freigelegten Kabelbereich angeordnet. Hierfür werden die elastisch spannbaren Klammerstreben auseinander gespannt, um das Kabel zwischen sich aufnehmen zu können. Vorzugsweise wird das Kabel radial in Längsrichtung der Klammerstreben, bzw. radial zur Biegung der Spannflügel, d. h. radial zur Kabelachse, zwischen die Klammerstreben eingelegt. Grundsätzlich kann das Kabel auch in Längsrichtung, also senkrecht zu den Klammerstreben, zwischen diese eingeführt werden, beispielsweise falls eine Klammeröffnung durch Stauchung der Klammerstreben aufgeweitet wird. Das Klammerteil wird dabei in einem Klemmsitz auf der Kabelabschirmung positioniert. Die bogenartigen Spannflügel werden elastisch vorgespannt, beispielsweise radial nach innen in Richtung der Klammerstreben gepresst, so dass der gesamte Umfang des Klammerteils kleiner ist als der Innenumfang des Basisteils ist. In diesem vorgespannten Zustand kann das Klammerteil mit dem darin eingeklemmten Kabel in das Basisteil eingeführt werden. Im Inneren des Basisteils springen die Spannflügel auf Grund ihrer Vorspannkraft radial nach aussen und werden gegen die Innenumfangsfläche des Basisteils gepresst. Zur Fixierung des Klammerteils innerhalb des Basisteils wird das Anschlussteil in axialer Richtung mit dem Basisteil verbunden. Das verwendete Material ist vorzugsweise elektrisch leitend, damit das Klammerteil nicht nur als Halteteil, sondern auch als Kontaktteil für eine elektrische Verbindung verwendet werden kann, wie oben beschrieben. Als Material wird z. B. ein Federstahl verwendet oder ein elastischer Kunststoff, der mit einer elektrisch leitenden Beschichtung versehen ist oder selbst elektrisch leitende Eigenschaften aufweist.

Die erfindungsgemässe Haltevorrichtung erfasst ein Kabel, bzw. eine Kabelabschirmung, mit den Längsseiten der Klammerstreben, so wird verhindert, dass das Kabel oder die Abschirmung beim Einführen in das Klammerteil durch Kanten oder Spitzen beschädigt werden kann. Zudem kann das Kabel im Klammerteil problemlos in eine gewünschte Position gedreht oder geschoben werden. Durch das Anbringen des Klammerteils an der Kabelabschirmung und somit der Herstellung eines Kontakts zwischen Klammerteil und Abschirmung bevor das Klammerteil in das Basisteil eingesetzt und das Anschlussteil verbunden wird, kann eine korrekte Kontaktierung sichergestellt werden. Die Kontaktierung mittels eines Klemmsitzes zwischen den Klammerstreben gewährleistet ein sicheres Halten und einen Kontakt sowohl bei kleinen als auch bei grossen Kabeldurchmessern. Ferner ist das Klammerteil als einfaches Bauelement der Haltevorrichtung ausgebildet. Es kann ohne weitere Vormontageschritte unmittelbar am Kabel angebracht werden, ist dabei robust und kann in einfacher Weise z. B. aus einer einzigen Materiallage hergestellt werden. Die Haltevorrichtung ist insbesondere zum Halten und Positionieren eines einzelnen Kabels geeignet.

Bei einer Ausführungsform einer Haltevorrichtung nach der vorliegenden Erfindung sind zwei Spannflügel vorgesehen, die bogenartig jeweils von einer Klammerstrebe abragen. Vorzugsweise ragen die Spannflügel in entgegengesetzter Richtung jeweils von einer Klammerstrebe ab. Die Spannflügel bilden dabei eine Art Kreissegment, das die Klammerstreben zumindest teilweise bogenförmig umgibt, und können nach innen zu den Klammerstreben hin vorgespannt werden. Vorteilhafterweise überspannen die Spannflügel zwei diametral gegenüberliegende Bereich eines Umfangs und somit auch einer Innenumfangsfläche eines Basisteils, wenn das Klammerteil in das Basisteil eingesetzt ist.

Grundsätzlich könnte auch nur ein einziger Spannflügel vorhanden sein, der von einer der Klammerstrebe bogenförmig abragt. Dieser sollte dann die Klammerstreben soweit kreisförmig umgeben, dass er sicher in die Innenwand des Basisteils eingespannt werden kann. Ferner ist es möglich, dass zwei entgegengesetzt abragende Spannflügel bogenartig die Klammerstreben umgeben und an ihren Enden überlappen. Auch können derartige Spannflügel an den Enden miteinander verbunden sein, so dass sich ein einziger Spannflügel ergibt, der mit jedem Ende an einer Klammerstrebe verbunden ist.

Vorzugsweise sind Klammerstreben und Spannflügel des Klammerteils derart orientiert, dass der eine oder die mehreren Spannflügel die Klammerstreben auf einer Ebene umgibt, die durch die Längsachse der Klammerstreben verläuft. Die gebogene, geknickte oder anderweitig geformte Materiallinie des Klammerteils verläuft somit zweidimensional und Klammerstreben und Spannflügel liegen in einer gemeinsamen Ebene.

Das Klammerteil der Haltevorrichtung kann flächige Klammerstreben und Spannflügel aufweisen. Beispielsweise kann das Klammerteil aus einem Materialstreifen, etwa einem Metallstreifen, bestehen, der mit herkömmlichen Verfahren in die gewünschte Form zur Ausbildung von Klammerstreben und Spannflügel gebracht wird. Die Flächen sind im Wesentlichen senkrecht zur Ebene der Klammerstreben und Spannflügel ausgerichtet. Die flächig ausgebildeten Klammerstreben und Spannflügel weisen somit Halte-, bzw. Kontaktflächen auf, die am Kabel, bzw. der Basisteilinnenfläche anliegen können. Damit wird der Sitz des Klammerteils am Kabel stabilisiert und die elektrische Verbindung zwischen Abschirmung und Basisteil verbessert. Die Breite der Klammerstreben und Spannflügel, bzw. eines Materialstreifens, beträgt vorzugsweise weniger als die vom Innenraum des Basisteils zur Verfügung stehende Länge. Grundsätzlich kann aber auch ein rundes Material, beispielsweise ein Draht, verwendet werden, um ein erfindungsgemässes Klammerteil auszuformen.

In einer Ausführungsform einer Haltevorrichtung nach der vorliegenden Erfindung umfasst das Klammerteil vorzugsweise zwei Klammerstreben, die wenigstens stellenweise zumindest annähernd parallel verlaufen, wobei die Klammerstreben an einem Übergangsende in einem Übergangsbereich in einander übergehen und sich zumindest an einem der Klammerstreben an einem Flügelende ein Spannflügel anschliesst. Vorzugsweise ist an beiden Klammerstreben am Flügelende ein Spannflügel vorgesehen. Die Klammerstreben mit dem Übergangsbereich können beispielsweise U-förmig ausgestaltet sein, wobei an den U-Spitzen die Spannflügel abragen. Die im Wesentlichen nebeneinander verlaufenden Klammerstreben können dadurch einen länglichen Klammerraum bilden, in dem das Kabel aufgenommen werden kann. Dieser Klammerraum verläuft im Wesentlichen radial zu den bogenförmigen Spannflügeln und weist einen Einführschlitz zwischen den Flügelenden auf. Beim auseinander spannen der Klammerstreben öffnet sich der Einführschlitz zum Einlegen des Kabels und die Klammerstreben werden auf Grund ihrer Vorspannung gegen das Kabel gepresst. Dabei wird das Kabel entlang der Längsseiten des Klammerteils bewegt und kann nicht durch Spitzen oder Kanten beschädigt werden. Grundsätzlich ist es denkbar, mehr als ein solches Klammerstrebenpaar am Klammerteil auszubilden, beispielsweise können vier Klammerstreben ausgeformt werden, wobei jeweils zwei durch einen Übergangsbereich in eine U-Form mit einem Einführschlitz gebracht werden können. Die Haltevorrichtung wäre somit zur Aufnahme von zwei Kabeln geeignet.

Die Klammerstreben können im Mittelbereich zwischen Übergangsende und Flügelende eine Ausbuchtung, z. B. in Form einer Rundung, eines leichten Knicks oder in einer Bogenform, aufweisen, wobei die Klammerstreben bzgl. der Ausbuchtung spiegelsymmetrisch zur Längsachse der Klammerstreben angeordnet sind. Somit ergibt sich im länglichen Raum ein ausgeformter Haltebereich, der das Kabel an gegenüberliegenden Seiten umgibt und durch den ein Kabel in Längsrichtung der Klammerstreben fixiert werden kann. Das Kabel kann somit eine definierte Position innerhalb des Basisteils einnehmen. Die Ausgestaltung der Ausbuchtungen ist dabei vorzugsweise derart, dass, sobald ein Kabel zwischen die Klammerstreben eingebracht wird, die Ausbuchtungen das Kabel von beiden Seiten umklammern und die Flügelenden der Klammerstreben hinter dem Kabel wieder zu einander weisen. Mit anderen Worten weisen die Flügelenden der Klammerstreben sowohl in einem entspannten Zustand ohne einem zwischen ihnen durchlaufenden Kabel als auch in einem gespannten Zustand mit einem durchlaufenden Kabel, wobei die Klammerstreben um den Übergangsbereich aufgebogen werden, einen Abstand zueinander auf, der kleiner ist als ein Kabeldurchmesser. Je nach Art der Ausbuchtung kann dies für Kabel mit verschiedenem Durchmesser realisiert werden. Dadurch wird sichergestellt, dass die Spannkraft der Klammerstreben das Kabel in Richtung der Ausbuchtung mit Kraft beaufschlagt. Das Kabel kann somit nicht ohne weiteren Kraftaufwand aus dem Klemmsitz zwischen den Klammerstreben herausspringen.

Der Übergangsbereich bildet bei dieser Ausführungsform einen Biegepunkt zum elastischen Auseinanderbiegen der Flügelenden der Klammerstreben. Die Flügelenden, von welchen die Spannflügel abragen, bilden im Allgemeinen einen Biegepunkt zum elastischen Biegen der Spannflügel, insbesondere zum Biegen der Spannflügel radial zu ihrer Biegeform in Richtung der Klammerstreben. Das Klammerteil fungiert somit im Sinne einer Art Blattfeder mit drei Biegepunkten entlang der Federlänge. Die Biegepunkte unterteilen die Feder in einen ersten Spannflügel, eine erste Klammerstrebe, eine zweite Klammerstrebe und einen zweiten Spannflügel, die zick-zack-artig verlaufen.

Die Länge der Klammerstreben kann derart dimensioniert sein, dass der Übergangsbereich dazwischen am Innenumfang des Basisteils anliegt, sobald das Klammerteil in das Basisteil eingesetzt ist. In diesem Fall dient der Übergangsbereich, bzw. dienen die Klammerstreben, als Haltepunkt zum Positionieren des Klammerteils innerhalb des Basisteils und die Spannflügel können kürzer ausgebildet werden. Das Basisteil umfasst einen Anschlag an dem das Klammerteil innerhalb des Basisteils in axialer Richtung anstösst. Der Anschlag kann hierfür radial von der Innenumfangsfläche des Basisteils abstehen. Die Anschlagfläche kann zusätzlich als Kontaktfläche für einen elektrischen Kontakt zwischen Basisteil und Klammerteil dienen. Ferner kann die Innenumfangsfläche als elektrische Kontaktfläche dienen. Das Anschlussteil kann einen Gegenanschlag aufweisen, an welchem das Klammerteil in axialer Richtung anschlägt, wenn das Basisteil mit dem Anschlussteil verbunden ist. Auch der Gegenanschlag kann radial zur Kabelachse, bzw. zur Anschlussteilachse verlaufen. Bei der Montage des Kabels in der Haltevorrichtung wird das Anschlussteil in axialer Richtung an dem Basisteil angebracht und mit diesem Verbunden, beispielsweise durch eine Verschraubung. Das Anschlussteil wird soweit auf das Basisteil aufgesetzt oder in dieses hineingeschoben, bis das Klammerteil mit einer ersten Kante am Anschlag und mit einer zweiten, in entgegen gesetzte Richtung weisenden Kante am Gegenanschlag anstösst.

Vorzugweise weist das Anschlussteil eine formbare Dichtung als Gegenanschlag auf. Die Dichtung dient als Anschlag bei der Fixierung des Klammerteils in seiner Anschlagposition zwischen Basisteil und Anschlussteil. Dabei kann beim Aufsetzten des Anschlussteils auf das Basisteil die Dichtung deformiert werden, beispielsweise kann sich eine Kante des Klammerteils in die Dichtung eingraben. So kann das Klammerteil zusätzlich innerhalb des Basisteils fixiert werden. Die Dichtung kann beispielsweise aus einem gummiartigen Material bestehen, etwa als Gummiring oder -schlauchstück, das zumindest teilweise innerhalb des Anschlussmittels angeordnet ist. Darüber hinaus kann beim axialen Verbinden des Anschlussteils mit dem Basisteil die Dichtung axial zusammengepresst werden, wodurch sich der innere Querschnitt der Dichtung verringert bis die Dichtung das durchgeführte Kabel umschliesst.

In einer anderen Variante kann ein Distanzring oder ein Dichtungsträger, welcher eine Dichtung zumindest teilweise aufnehmen kann, als Gegenanschlag dienen. Der Distanzring oder der Dichtungsträger kann beispielsweise als Spannfutter mit Spannbacken ausgebildet sein. Dabei können die Spannbacken beim Verbinden von Basisteil und Anschlussteil das Kabel umfassen und dieses in der Haltevorrichtung fixieren.

Eine erfindungsgemässe Haltevorrichtung umfasst im Wesentlichen nur drei Bauteile oder vier inklusive eines Dämpfungsmittels. Die Materialkosten bleiben daher niedrig und die Montage eines Kabels innerhalb der Haltevorrichtung umfasst nur wenige Arbeitsschritte. Darüber hinaus weist eine erfindungsgemässe Haltevorrichtung eine kurze Bauweise auf, da sich das Klammerteil, welches das Kabel hält, im Wesentlichen in radialer Richtung und nicht in Längsrichtung ausdehnt.

Die Erfindung offenbart auch Konstrukte, wie sie in den folgenden nummerierten Sätzen 1 bis 17 beschrieben sind:
- Satz 1:: Haltevorrichtung zum Halten eines Kabels, umfassend: ein hülsenförmiges Basisteil (1), ein Anschlussteil (2), das mit dem Basisteil (1) verbindbar ist, und ein elastisch spannbares Klammerteil (3), das zwi-schen Basisteil (1) und Anschlussteil (2) angeordnet ist, wobei das Klammerteil (3) elastisch spannbare Klammerstreben (7), die geeignet sind ein Kabel zu umklammern, und wenigstens einen Spannflügel (9) aufweist, der bogenartig von einer Klammerstrebe (7) abragt und das Klammerteil (3) elastisch gespannt an einer Innenumfangsfläche des Basisteils (1) abstützt, und wobei Klammerstreben (7) und Spannflügel (9) durchgehend an einander anschliessen.
- Satz 2:: Haltevorrichtung nach Satz 1, wobei Klammerstreben (7) und Spannflügel (9) an einem einstückigen Formteil ausgeformt sind.
- Satz 3:: Haltevorrichtung nach Satz 1, wobei das Klammerteil (3) mehrteilig entlang einer Linienführung ausgebildet ist.
- Satz 4:: Haltevorrichtung nach einem der vorhergehenden Sätze 1 bis 3, wobei zwei Spannflügel (9) vorgesehen sind, die bogenartig jeweils von einer Klammerstrebe (7) abragen.
- Satz 5:: Haltevorrichtung nach einem der vorhergehenden Sätze 1 bis 4, wobei zwei Spannflügel (9) in entgegen gesetzter Richtung jeweils von einer Klammerstrebe (7) abragen.
- Satz 6:: Haltevorrichtung nach einem der vorhergehenden Sätze 1 bis 5, wobei der wenigstens eine Spannflügel (9) die Klammerstreben (7) in einer Ebene zumindest teilweise bogenförmig umgibt, die durch die Längsachse der Klammerstreben verläuft.
- Satz 7:: Haltevorrichtung nach einem der vorhergehenden Sätze 1 bis 6, wobei Klammerstreben (7) und Spannflügel (9) flächig ausgebildet sind.
- Satz 8:: Haltevorrichtung nach einem der vorhergehenden Sätze 1 bis 7, wobei wenigstens zwei Klammerstreben (7) wenigstens stellenweise zumindest annähernd parallel verlaufen, wobei die Klammerstreben (7) in einem Übergangsbereich (8) in einander übergehen und sich zumindest an einem der Klammerstreben (7) an einem Flügelende (10) ein Spannflügel (9) anschliesst.
- Satz 9:: Haltevorrichtung nach dem vorhergehenden Satz, wobei der Übergangsbereich (8) einen Biegepunkt zum elastischen Auseinanderbiegen der Flügelenden (10) der Klammerstreben (7) bildet und die Flügelenden (10) einen Biegepunkt zum elastischen Biegen der Spannflügel (9) bilden.
- Satz 10:: Haltevorrichtung nach einem der vorhergehenden Sätze 1 bis 9, wobei nebeneinander verlaufende Klammerstrebe (7) einen länglichen Klammerraum bilden, der im Wesentlichen radial zu den bogenförmigen Spannflügeln (9) verläuft und einen Einführschlitz (11) zwischen den Flügelenden (10) aufweist.
- Satz 11:: Haltevorrichtung nach dem vorhergehenden Satz, wobei der Klammerraum einen Aufnahmeraum (13) zwischen Ausbuchtungen (12) ausbildet, die jeweils in einem mittleren Bereich der Klammerstreben (7) vorgesehen sind.
- Satz 12:: Haltevorrichtung nach einem der vorhergehenden Sätze 1 bis 11, wobei die Flügelenden (10) der Klammerstreben (7) in einem entspannten Zustand ohne einem zwischen ihnen durchlaufenden Kabel (15) und in einem gespannten Zustand mit einem durchlaufenden Kabel (15) einen Abstand zueinander aufweisen, der kleiner ist als ein Kabeldurchmesser.
- Satz 13:: Haltevorrichtung nach einem der vorhergehenden Sätze 1 bis 12, wobei ein Abstand zwischen den Klammerstreben (7) in einem Bereich der Flügelenden (10) kleiner ist als im Bereich des Aufnahmeraums (13).
- Satz 14:: Haltevorrichtung nach einem der vorhergehenden Sätze 1 bis 13, wobei das Basisteil (1) einen Anschlag (19) und das Anschlussteil einen Gegenanschlag (20; 20') umfassen, an welchen das Klammerteil (3) in axialer Richtung anschlägt, wenn das Basisteil (1) mit dem Anschlussteil (2) verbunden ist.
- Satz 15:: Haltevorrichtung nach dem vorhergehenden Satz, wobei das Anschlussteil (2) eine formbare Dichtung (4) oder einen Dichtungsträger (4") als Gegenanschlag (20) aufweist.
- Satz 16:: Haltevorrichtung nach dem vorhergehenden Satz, wobei das Klammerteil (3) einen elektrischen Kontakt zwischen einer Abschirmung (17) und dem Basisteil (1) herstellt.
- Satz 17:: Haltevorrichtung nach dem vorhergehenden Satz, wobei das Klammerteil (3) aus einem elektrisch leitenden Material, insbesondere aus Federstahl, leitfähigem Kunststoff oder Kunststoff mit leitfähiger Beschichtung, besteht.

Bevorzugte Ausführungsformen der Erfindung werden im Folgenden anhand der Zeichnungen dargestellt, die lediglich zur Erläuterung dienen und nicht einschränkend auszulegen sind. Aus den Zeichnungen offenbar werdende Merkmale der Erfindung sollen einzeln und in jeder Kombination als zur Offenbarung der Erfindung gehörend betrachtet werden. In den Zeichnungen zeigen:
- Fig. 1:: eine dreidimensionale Darstellung einer Haltevorrichtung nach der vorliegenden Erfindung in einem montierten Zustand,
- Fig. 2a:: eine Explosionsdarstellung einer ersten Variante einer Haltevorrichtung nach der Erfindung,
- Fig. 2b:: eine Explosionsdarstellung einer zweiten Variante einer Haltevorrichtung nach der Erfindung,
- Fig. 3:: eine seitliche Darstellung der Haltevorrichtung nach Figur 1,
- Fig. 4:: einen Längsschnitt durch die Haltevorrichtung entlang einer Line B-Bder Figur 4 und
- Fig. 5:: eine Aufsicht auf ein Klammerteil der Haltevorrichtung nach der vorliegenden Erfindung.

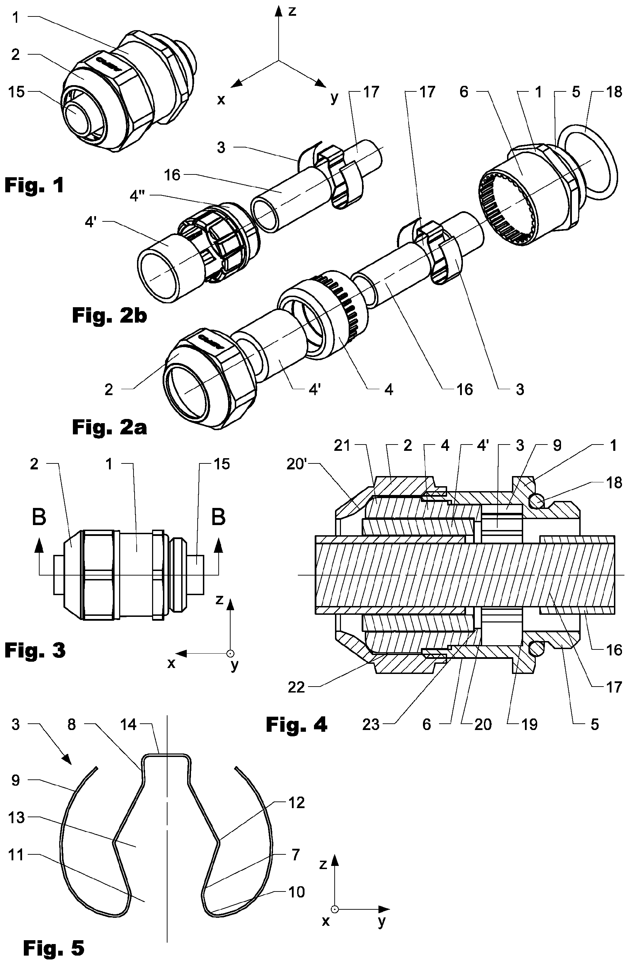

In den Figuren 1, 2a und 2b ist eine Ausführungsform einer Haltevorrichtung gemäss der vorliegenden Erfindung in einem zusammengesetzten Zustand, in dem die Haltevorrichtung auf einem Kabel montiert ist, und in einer Explosionsdarstellung gezeigt. Die Haltevorrichtung umfasst ein hülsenförmiges Basisteil 1, ein Anschlussteil 2 in Form einer Überwurfmutter und ein Klammerteil 3. Weiter ist eine hülsenförmige Dichtungsanordnung vorgesehen, die vom Anschlussteil 2 aufgenommen wird und am Basisteil 1 anschlägt. In einer Variante der Haltevorrichtung nach Figur 2a besteht die Dichtung besteht zwei in einander greifenden Dichtringen 4 und 4'. In der Variante der Haltevorrichtung nach Figur 2b ist ein hülsenförmiger Dichtungsträger 4"vorgesehen, der z. B. die Form eines Spannfutters mit Spannbacken oder Lamellen aufweist. Der Dichtungsträger 4" kann den Dichtring 4' aufnehmen. Für beide Varianten gemäss der Figuren 2a und 2b weist das Basisteil 1 ein erstes Gewinde 5 auf, mittels dem die Haltevorrichtung z. B. an einem Schaltschrank (nicht dargestellt) befestigt werden kann. Andere Verbindungsmittel sind möglich. Die Überwurfmutter 2 wird in der gezeigten Ausführungsform mit dem Basisteil 1 durch Verschrauben an einem zweiten Gewinde 6 verbunden. Auch hier sind andere Verbindungsmittel denkbar. Ein Kabel 15 mit einem Kabelmantel 16 und einer Abschirmung, bzw. einem Schirmgeflecht, 17 verläuft in Figur 1 durch das Basisteil 1 und das Anschlussteil 2. Ein Dichtring 18 kann im Bereich des Gewindes 5 auf dem Basisteil 1 vorgesehen werden.

In Figur 5 ist das Klammerteil 3 im Detail dargestellt. Das Klammerteil ist aus einem durchgehenden Materialstreifen gefertigt, aus dem zwei elastisch spannbare Klammerstreben 7 mit einem Übergangsbereich 8 und zwei elastisch spannbare Spannflügel 9 ausgeformt sind. Dabei liegen die Klammerstreben 7 und die Spannflügel 9 in einer Ebene. Der Übergangsbereich 8 bildet einen Biegebereich, an den die Klammerstreben 7 entgegen einer elastischen Spannkraft von einander weg gebogen werden können. Hierfür ist der Übergangsbereich mit einer Verbindungsfläche 14 ausgebildet, welche die beiden Klammerstreben 7 beabstandet von einander verbindet. Dabei können beispielsweise auch zwei Teile des Klammerteils (3) im Bereich der Verbindungsfläche 14 an einander befestigt werden. Zum Beispiel kann das Klammerteil (3) in zwei symmetrische Teile mit jeweils einer Klammerstrebe 7 und einem Klammerflügel 9 zu dem Klammerteil 3 zusammengefügt werden. Dabei gehen die beiden symmetrischen Teile in einer fortlaufenden Linie in einander über. Die Verbindungsfläche 14 wird beim Aufbiegen der Klammerstreben 7 ebenfalls geringfügig elastisch deformiert und begünstigt die Biegeeigenschaften der Klammerstreben 7. Der Übergangsbereich 8 mit der Verbindungsfläche 14 und den Enden der Klammerstreben 7 ist annähernd U-förmig ausgebildet. Die Spannflügel 9 ragen winkelig von einem Flügelende 10 von den Klammerstreben 7 jeweils in entgegen gesetzte Richtungen ab. Die Spannflügel 9 sind derart gebogen, dass ihre Enden in Richtung des Übergangsbereichs 8 weisen. Die Spannflügel 9 gemeinsam umspannen die Klammerstreben 7 kreisbogenartig. Dabei verlaufen die Klammerstreben 7 zumindest annähernd radial zu diesem Kreisbogen und im Wesentlichen parallel zu einander. Zwischen den Flügelenden 10 ist ein Einführschlitz 11 ausgebildet, der entgegen einer Spannkraft der Klammerstreben aufgeweitet werden kann. Die Spannflügel 9 können um einen Biegepunkt am Flügelende 9 der Klammerstreben 7 entgegen einer Spannkraft zu den Klammerstreben 7 hin gebogen werden.

Die Klammerstreben 7 sind bzgl. einer Längsachse zwischen ihnen zu einander spiegelsymmetrisch ausgebildet, wobei der Abstand zwischen den Klammerstreben 7 entlang der Längsrichtung variiert, so dass die Klammerstreben 7 eine optimale Haltefunktion übernehmen können. In einem mittleren Bereich zwischen dem Übergangsbereich 8 und den Flügelenden 10 ist jeweils eine Ausbuchtung 12 an den Klammerstreben 7 ausgeformt, so dass sich zwischen den Klammerstreben 7 ein aufgeweiteter Aufnahmeraum 13 zur Aufnahme eines Kabels ausbildet. In diesem Bereich weisen die Klammerstreben 7 einen grossen Abstand auf. Die Ausbuchtung 12 ist als Knick derart vorgesehen, dass der Verlauf der Klammerstreben 7 in Richtung der Flügelenden 10 nach diesem Knick zur gegenüberliegenden Klammerstrebe gerichtet ist, damit der Einführschlitz einen kleinen Abstand zwischen den Flügelenden 10 der Klammerstreben 7 ermöglicht. Grundsätzlich können sich die Flügelenden 10 der Klammerstreben 7 auch berühren, falls kein Kabel eingesetzt ist. Der Einführschlitz 11 ist somit enger als der Abstand der Ausbuchtungen 12 von einer Klammerstrebe 7 zur gegenüberliegenden Klammerstrebe 7. Die Ausbuchtung 12 ist vorzugsweise derart ausgeformt, dass der Einführschlitz 11 auch dann noch enger ist, wenn das Kabel im Aufnahmeraum 13 angeordnet ist, wodurch die Klammerstreben 7 aufgeweitet sind und sich der Abstand im Bereich der Ausbuchtungen 12 vergrössert hat. Damit wird sicher gestellt, dass das Kabel nicht ohne Kraftanwendung durch den Einführschlitz 11 entweichen kann.

Unterhalb des Aufnahmeraums 13, bzw. der Ausbuchtungen 12, in Richtung des Übergangsbereichs 8 verjüngt sich der Abstand zwischen den Klammerstreben 7. Der Abstand ist in diesem Bereich so klein, dass ein Kabel im Aufnahmeraum 13 nicht bis in den Übergangsbereich 8 hineinrutschen kann. Das Kabel kann zwischen den Klammerstreben 7 in einer vorbestimmten Halteposition in Längsrichtung der Klammerstreben 7 positioniert und in dieser Position sicher fixiert werden. Diese Halteposition behält es auch beim Einsetzen in das Basisteil 1 bei.

In Figur 3 ist die Haltevorrichtung mit Basisteil 1, Anschlussteil 2 und Kabel 15 von einer Längsseite gezeigt und in Figur 4 ist ein Längsschnitt durch die Haltevorrichtung entlang der Linie B - B aus Figur 3 zu sehen. Das Klammerteil 3 ist auf die Abschirmung 17 aufgesetzt, so dass die Klammerstreben 7 die Abschirmung 17 von zwei Seiten sicher umklammern, so dass das Klammerteil 3 in Längsrichtung auf dem Kabel 15 an einer definierten Position angebracht ist. Das Kabel 15 wird mit dem Klammerteil 3 durch das Basisteil 1 eingeführt bis das Klammerteil 3 innerhalb des Basisteils 1 zu liegen kommt. Dabei liegen die Spannflügel 9 an der Innenumfangsfläche des Basisteils 1 an. Das Klammerteil 3 wird soweit in das Basisteil 1 eingeschoben, bis der Rand der Spannflügel 9 an einem Anschlag 19 anstossen, wodurch das Klammerteil 3 und das Kabel 15 relativ zum Basisteil 1 eine definierte Längsposition einnehmen. Der Anschlag 19 ist kann radial z. B. in Form einer Stufe am Innenumfang des Basisteils 1 angeordnet sein.

Die Dichtringe 4 und 4', bzw. der Dichtungsträger 4" und der Dichtring 4', werden zunächst teilweise ineinander gesetzt und zumindest teilweise in das Anschlussteil 2 eingeschoben. Diese Dichtungsanordnung und das Anschlussteil 2 werden über das Kabel geführt, so dass das Anschlussteil 2 mit einem Innengewinde 22 auf das Gewinde 6 des Basisteils 1 aufgeschraubt werden kann. Dabei bildet ein erster Rand der Dichtungsanordnung, d. h. ein Dichtring 4 oder 4', bzw. der Dichtungsträger 4", einen Gegenanschlag 20 gegen den der Rand des Klammerteils 3 anstösst. Ein zweiter gegenüberliegender Rand 21 der Dichtungsanordnung, also einer der Dichtringe 4 und 4' oder der Dichtungsträger 4" stösst gegen einen abschliessenden Gegenanschlag 20' am Anschlussteil 2. Indem das Anschlussteil 2 über das Basisteil 1 geschraubt wird, erfolgt eine relative Bewegung zwischen Basisteil 1 und Anschlussteil 2 entlang der Längsrichtung der Haltevorrichtung, bzw. des Kabels 15. Dabei werde die Dichtringe 4 und 4', bzw. der Dichtungsträger 4", gegen den Rand des Klammerteils 3 gepresst, so dass dieses gegen den Anschlag 19 am Basisteil 1 gepresst wird, und gegen den abschliessenden Gegenanschlag 20' am Anschlussteil 2. Bei der Variante gemäss Figur 2a werden dabei die Dichtringe 4 und 4' in einander geschoben, bis der Dichtring 4' an einer radialen Kante 23 am Dichtring 4 anstösst. Bei der Variante nach Figur 2b wird der Dichtring 4' in den Dichtungsträger 4" geschoben und stösst dort an einer Kante an. Bei einem weiteren Aufschrauben des Anschlussteils 2 auf das Basisteil 1 werden die Dichtringe 4 und 4', bzw. der Dichtungsträger 4" und der Dichtring4', komprimiert, so dass sich der Innendurchmesser um das Kabel 15 verkleinert und das Kabel fest und dichtend umschliesst.

Bevor das Anschlussteil 2 derart auf dem Basisteil 1 angezogen wird, dass die Dichtringe 4 und 4' fest dem Kabel 15 sitzen, kann das Kabel relativ zum Basisteil 1, zum Anschlussteil 2 und innerhalb des Klammerteils 3 verdreht werden. Die Flächen der Klammerstreben 7 gleiten dabei entlang der Abschirmung 17 ohne diese zu verletzen. Beim Festlegen des Kabels 15 innerhalb der Haltevorrichtung durch das Zusammenschrauben von Basisteil 1 und Anschlussteil 2 werden die Klammerstreben 7 des Klammerteils 3, welche den elektrischen Kontakt zur Abschirmung 17 herstellen, nicht relativ zum Kabel 15 bewegt. Der Kontakt kann daher zuverlässig zur Abschirmung hergestellt werden. Das Klammerteil 3 schlägt wiederum am Anschlag 19 des Basisteils 1 an und stellt den elektrischen Kontakt zum Basisteil 1 und somit zu einem Gehäuse, mit welchem das Basisteil 1 verbunden werden kann, her. Die Haltevorrichtung gemäss der Erfindung dient somit auch als Kontaktvorrichtung zur Herstellung eines Kontakts zwischen der Abschirmung 17 des Kabels 15 und einem Gehäuse und dient der Erdung des Kabels.

### Liste der Bezugszeichen

| | | | |
|---|---|---|---|
| 1 | Basisteil | 12 | Ausbuchtung |
| 2 | Anschlussteil | 13 | Aufnahmeraum |
| 3 | Klammerteil | 14 | Verbindungsfläche |
| 4, 4' | Dichtung | 15 | Kabel |
| 4" | Dichtungsträger | 16 | Kabelmantel |
| 5 | erstes Gewinde | 17 | Abschirmung, Schirmgeflecht |
| 6 | zweites Gewinde | 18 | Dichtring |
| 7 | Klammerstrebe | 19 | Anschlag |
| 8 | Übergangsbereich | 20, 20' | Gegenanschlag |
| 9 | Spannflügel | 21 | Rand Dichtring |
| 10 | Flügelende | 22 | Innengewinde |
| 11 | Einführschlitz | 23 | Kante Dichtring |

## Patentansprüche

1. Haltevorrichtung zum Halten eines Kabels, umfassend:
a. ein hülsenförmiges Basisteil (1), ein Anschlussteil (2), das mit dem Basisteil (1) verbindbar ist, und
b. ein elastisch spannbares Klam merteil (3), das zwischen Basisteil (1) und Anschlussteil (2) angeordnet ist,
c. wobei das Klammerteil (3) elastisch spannbare Klammerstreben (7), die geeignet sind ein Kabel zu umklammern, und wenigstens einen Spannflügel (9) aufweist, der bogenartig von einer Klammerstrebe (7) abragt und das Klammerteil (3) elastisch gespannt an einer Innenumfangsfläche des Basisteils (1) abstützt, und wobei Klammerstreben (7) und Spannflügel (9) durchgehend an einander anschliessen, und wobei
d. wenigstens zwei Klammerstreben (7) wenigstens stellenweise zumindest annähernd parallel verlaufen, wobei die Klammerstreben (7) in einem Übergangsbereich (8) in einander übergehen und sich zumindest an einem der Klammerstreben (7) an einem Rügelende (10) ein Spannflügel (9) anschliesst.

2. Haltevorrichtung nach Anspruch 1, **dadurch gekennzeichnet, dass** Klammerstreben (7) und Spannflügel (9) an einem einstückigen Formteil ausgeformt sind.

3. Haltevorrichtung nach Anspruch 1, **dadurch gekennzeichnet, dass** das Klammerteil (3) mehrteilig entlang einer Linienführung ausgebildet ist.

4. Haltevorrichtung nach einem der vorhergehenden Ansprüche, **dadurch gekennzeichnet, dass** zwei Spannflügel (9) bogenartig in entgegen gesetzter Richtung jeweils von einer Klammerstrebe (7) abragen.

5. Haltevorrichtung nach einem der vorhergehenden Ansprüche, **dadurch gekennzeichnet, dass** der wenigstens eine Spannflügel (9) die Klammerstreben (7) in einer Ebene zumindest teilweise bogenförmig umgibt, die durch die Längsachse der Klammerstreben verläuft.

6. Haltevorrichtung nach einem der vorhergehenden Ansprüche, **dadurch gekennzeichnet, dass** Klammerstreben (7) und Spannflügel (9) flächig ausgebildet sind.

7. Haltevorrichtung nach einem der vorhergehenden Ansprüche, **dadurch gekennzeichnet, dass** der Übergangsbereich (8) einen Biegepunkt zum elastischen Auseinanderbiegen der Flügelenden (10) der Klammerstreben (7) bildet und die Flügelenden (10) einen Biegepunkt zum elastischen Biegen der Spannflügel (9) bilden.

8. Haltevorrichtung nach einem der vorhergehenden Ansprüche, **dadurch gekennzeichnet, dass** nebeneinander verlaufende Klammerstrebe (7) einen länglichen Klammerraum bilden, der im Wesentlichen radial zu den bogenförmigen Spannflügeln (9) verläuft und einen Einführschlitz (11) zwischen den Flügelenden (10) aufweist.

9. Haltevorrichtung nach dem vorhergehenden Anspruch, **dadurch gekennzeichnet, dass** der Klammerraum einen Aufnahmeraum (13) zwischen Ausbuchtungen (12) ausbildet, die jeweils in einem mittleren Bereich der Klammerstreben (7) vorgesehen sind.

10. Haltevorrichtung nach einem der vorhergehenden Ansprüche, **dadurch gekennzeichnet, dass** die Flügelenden (10) der Klammerstreben (7) in einem entspannten Zustand ohne einem zwischen ihnen durchlaufenden Kabel (15) und in einem gespannten Zustand mit einem durchlaufenden Kabel (15) einen Abstand zueinander aufweisen, der kleiner ist als ein Kabeldurchmesser.

11. Haltevorrichtung nach einem der vorhergehenden Ansprüche, **dadurch gekennzeichnet, dass** ein Abstand zwischen den Klammerstreben (7) in einem Bereich der Flügelenden (10) kleiner ist als im Bereich des Aufnahmeraums (13).

12. Haltevorrichtung nach einem der vorhergehenden Ansprüche, **dadurch gekennzeichnet, dass** das Basisteil (1) einen Anschlag (19) und das Anschlussteil einen Gegenanschlag (20; 20') umfassen, an welchen das Klammerteil (3) in axialer Richtung anschlägt, wenn das Basisteil (1) mit dem Anschlussteil (2) verbunden ist.

13. Haltevorrichtung nach dem vorhergehenden Anspruch, **dadurch gekennzeichnet, dass** das Anschlussteil (2) eine formbare Dichtung (4) oder einen Dichtungsträger (4") als Gegenanschlag (20) aufweist.

14. Haltevorrichtung nach dem vorhergehenden Anspruch, **dadurch gekennzeichnet, dass** das Klammerteil (3) einen elektrischen Kontakt zwischen einer Abschirmung (17) und dem Basisteil (1) herstellt.

15. Haltevorrichtung nach dem vorhergehenden Anspruch, **dadurch gekennzeichnet, dass** das Klammerteil (3) aus einem elektrisch leitendem Material, insbesondere aus Federstahl, leitfähigem Kunststoff oder Kunststoff mit leitfähiger Beschichtung, besteht.
